# EUROPEAN PATENT APPLICATION

(11) **EP 1 276 305 A1**
(43) Date of publication of application: **15.01.2003**
(21) Application number: 02100579.8
(22) Date of filing: 29.05.2002
(51) Int. Cl.: H04M 11/06, H04M 19/08, H04L 12/10

(54) **Modem isolation systems and apparatus**

(30) Priority: 30.05.2001 US 294437 P
(71) Applicant: Texas Instruments Incorporated, Dallas, Texas 75251 (US)
(72) Inventor: Prasad, Sudheer, 560 017, Bangalore (IN); Venkataraman, Srinivasan, 560 017, Murugeshpalya Bangalore (IN); Ali, Murtaza, TX 75024, Plano (US); Whitten, Darrell W., TX 75240, Dallas (US)
(74) Representative: Holt, Michael

(57) **Abstract**

Improved modem apparatus and systems for interfacing with a Public Switched Telephone Network (PSTN). The modem includes a broadband data channel. In one embodiment, a high-frequency transformer (56) isolates the broadband data channel. An external power source provides one or more power levels for the broadband data channel. In another embodiment, high voltage capacitors are used for isolation. The invention also provides a hybrid modem having a broadband data channel and a Voice Band (VB) data channel.

## Description

### TECHNICAL FIELD

This invention relates to modems and, in particular, to broadband data modems for use with a Public Switched Telephone Network (PSTN). More particularly, the invention relates to improved apparatus and systems for providing power isolation for modems having broadband data capabilities.

### BACKGROUND OF THE INVENTION

Modem technology for data communication is in a state of rapid development, striving to accommodate voice band data and broadband data communications. Hybrid modems have been developed in an effort to provide Voice Band (VB) and broadband data communications, for example, Digital Subscriber Line service (DSL), using a single modem rather than two modems. Speed and efficiency, both in terms of cost and space, are two primary challenges facing hybrid modem technology.

One of the major difficulties in integrating both broadband data and voice band data services in a single modem is caused by the requirement that the telephone line be isolated. The voice band data modem, typically operating in the range of up to about 3300 hertz, generally draws power directly from the telephone line and is thus unpowered when the telephone line is "on hook." The broadband data modem, however, requires power whether the telephone line is in either "on hook" or "off hook" status.

Existing solutions to providing the required power and isolation of both the broadband data and voice band data portions of hybrid modem typically employ two transformers. The Voice Band (VB) frequencies are low and thus the VB transformer needs to have either a large area or a large number of windings, and therefore tends to be bulky. The broadband transformer is required to operate with low loss at high frequencies, from about 30 kHz to 1 MHZ, and thus tends to be costly to manufacture. Another problem is that the transformers tend to be very large relative to the remainder of the modem circuitry.

Accordingly, a need exists for a way of eliminating one or more of the transformers used for isolation in a broadband or hybrid modem. A modem using alternative means of providing isolation in place of one or more transformers would provide numerous advantages, including reducing system costs and size.

### SUMMARY OF THE INVENTION

The invention provides an improved modem apparatus and system with an interface to a Public Switched Telephone Network (PSTN). A codec having a voice band data portion and a broadband data portion is coupled to the interface for transmitting and receiving protocol-specific signals over the PSTN. The broadband portion of the codec draws power from an independent power supply. The voice band portion of the codec may draw power from the PSTN line. A coupling mechanism connects the codec with a processor facilitating data interface between the codec and external hardware.

According to one aspect of the invention, the modem includes a broadband channel and a Voice Band (VB) channel. A pulse transformer forming an isolated DC-DC converter provides power for both VB and broadband channel. No power is drawn from the telephone line. A high voltage capacitive link isolates and transmits data to the processing unit.

According to another aspect of the invention, the modem includes a broadband data channel and a Voice Band (VB) channel having a high-frequency transformer for isolating the broadband channel from the PSTN line in the signal path. An external power source provides power for the broadband data channel. Capacitive coupling isolates the VB channel. Power may be provided to the VB channel by the PSTN line.

Another aspect of the invention includes a modem having a broadband data channel and a Voice Band (VB) channel with high-voltage capacitors in the signal path for isolating, and an external power source for powering, the broadband data channel. Capacitive coupling isolates the VB channel. VB channel power may be provided by the PSTN line.

The invention disclosed provides many technical advantages in that the improvements facilitate the provision of a plurality of different voltages to the modem components while maintaining isolation from the PSTN line.

Related technical advantages in size and cost are realized by the isolation and power features of the invention.

Further technical advantages of the invention are achieved in that the improved hybrid modem uses components coupled to a single ground, making the modem of the invention amenable to manufacture as a single integrated circuit.

### BRIEF DESCRIPTION OF THE DRAWINGS

In describing the features and advantages of the invention, reference is made to the following detailed description of the invention, taken in conjunction with the accompanying drawings of which:
Figure 1 is a block diagram showing an example of a hybrid modem of the invention;
Figure 2 shows a block diagram illustrating an alternative example of a hybrid modem of the invention; and
Figure 3 is a block diagram depicting another alternative example of a hybrid modem of the invention.

Corresponding numerals and symbols in the various figures refer to corresponding parts in the detailed description unless otherwise indicated.

### DETAILED DESCRIPTION OF PREFERRED EMBODIMENTS

While the making and using of various embodiments of the present invention are discussed in detail below, it should be appreciated that the present invention provides inventive concepts which can be embodied in a wide variety of specific contexts. The specific embodiments discussed herein are merely illustrative of specific ways to make and use the invention, and do not delimit the scope of the invention.

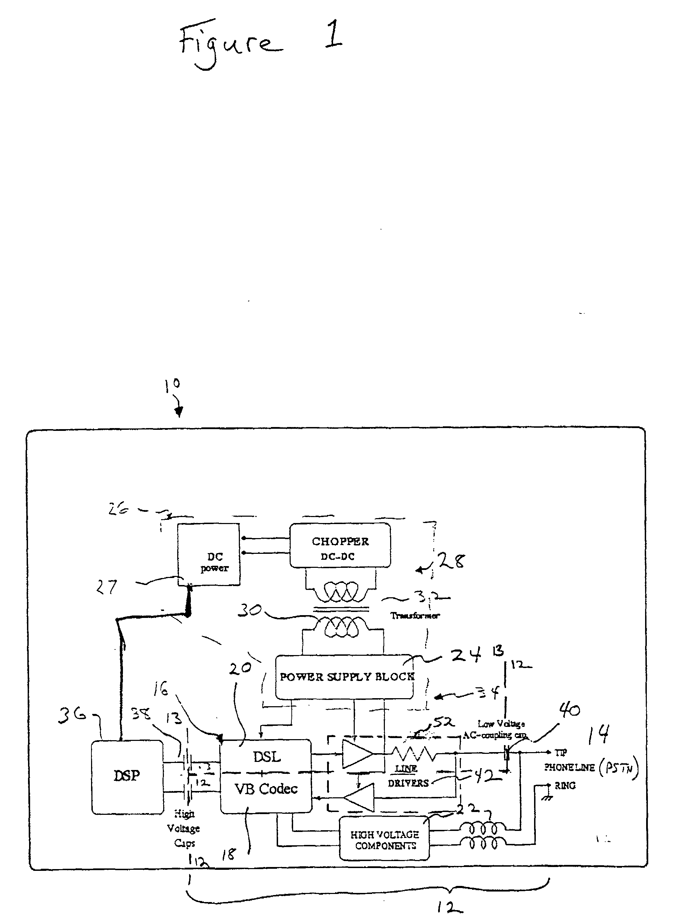

An example of a hybrid modem, according to the invention, is shown in the block diagram of Figure 1. The hybrid modem 10 has an interface 12 to a Public Switched Telephone Network (PSTN) link 14. Opposite the PSTN link 14, a codec 16 is coupled to the interface 12. The codec has a voice band data portion 18 and a broadband data portion 20. The codec voice band and broadband portions, 18, 20 are capable of transmitting and receiving Voice Band (VB) and broadband, such as DSL, protocol signals, respectively.

A DC power supply circuit 26 provides constant power to a power supply block 24 and, in turn, to the broadband data codec portion 20, and preferably to the VB data portion 18. The power supply block 24 is configured to provide power, regardless of whether the PSTN line 14 is "on hook" or "off hook". An isolating connection, preferably a chopper amplifier circuit 28, couples the DC power supply 26 with the broadband data codec 20. Of course, it will be apparent that various configurations of chopper or DC-to-DC converters are possible without departure from the concept of the invention. The isolating connection 28 provides isolation for the DC power source 27 of the power supply circuit 26. Preferably, the power supply block 24 is connected to the secondary winding 30 of a switching transformer 32. The DC power supply 26 feeds power to the transformer 32.

The coupling of the power supply block 24 with the secondary winding 30 may be combined with appropriate components, typically rectifier diodes and filter capacitors (not shown), in order to provide a plurality of different voltages to the broadband data codec 20, VB data codec 18, and to line drivers 42. In general, the amplifiers and 2-to-4 wire conversion elements are known as the "front end" 52 of the circuit.

The voice band portion 18 of the codec 16 preferably includes high voltage components 22, as known in the arts, such as transistors and diodes for providing Data Access Arrangement (DAA) functionality.

A processor, preferably a digital signal processor 36, is connected to the codec 16 through a coupling mechanism 38, preferably high voltage capacitors in the range of 100-300 picofarad. A low voltage AC coupling capacitor 40 is preferably used to block DC current and PSTN signals from entering the broadband path.

Of course, many variations are possible within the concept of the invention, including but not limited to the configuration of the power supply block 24 and line drivers 42. In operation, the switching transformer 32, along with capacitive coupling 38, provides isolation of the broadband data path 13 and VB data path 12 from the telephone line 14. The digital signals generated from the broadband data codec 20 are transmitted through the capacitive coupling 38 to the DSP 36. Optionally, the VB portion 12 of the circuit may be omitted, providing a broadband data modem.

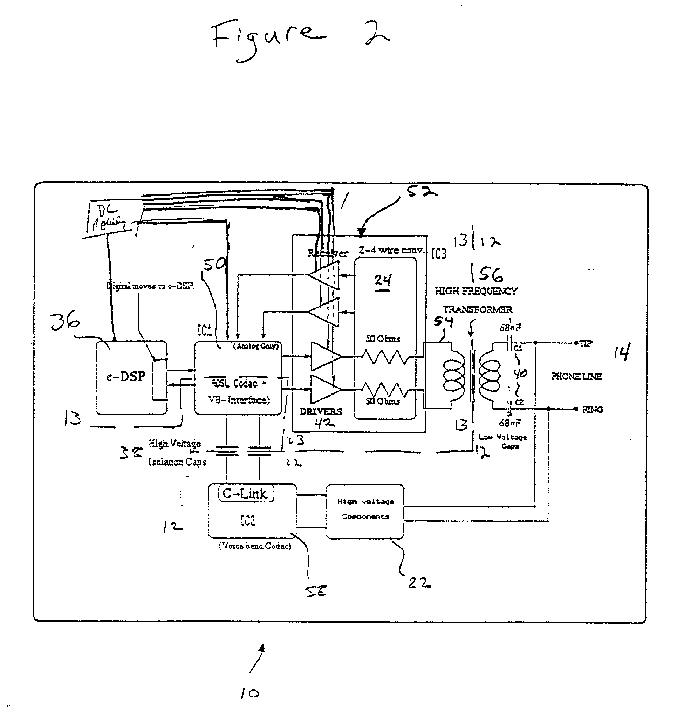

Now referring to Figure 2, a block diagram illustrates an alternative example of a hybrid modem 10 of the invention. As can be seen in the figure, the broadband portion 13 of the circuit contains a digital codec 50, preferably implemented in a CMOS chip and having a VB interface. A front end portion 52 of the circuit is coupled to the secondary winding 54 of a high frequency wideband transformer 56. Isolation of the broadband data path 13 is achieved by the use of wideband transformer 56. Each block in the broadband data path 13 is directly supplied with DC power. Low voltage isolation capacitors 40 block DC current and PSTN ring signals from entering the broadband data path 13.

The voice band data portion of the circuit 12 draws its power from the PSTN line 14, preferably using high voltage components 22, such as bipolar transistors and diodes to perform the necessary DAA functions, for example, DC termination, AC termination, two to four wire conversion, ring detect, and features such as caller ID. A VB codec 58 accommodates VB traffic. All voice channel communications are done through the capacitive coupling 38 isolating the VB portion 12 of the circuit 10. Preferably, the capacitive coupling 38 is provided with high voltage capacitors in the range of 100-300 pF. Thereafter, the VB signals pass through the digital codec / interface chip 50 to the signal processing circuit 36.

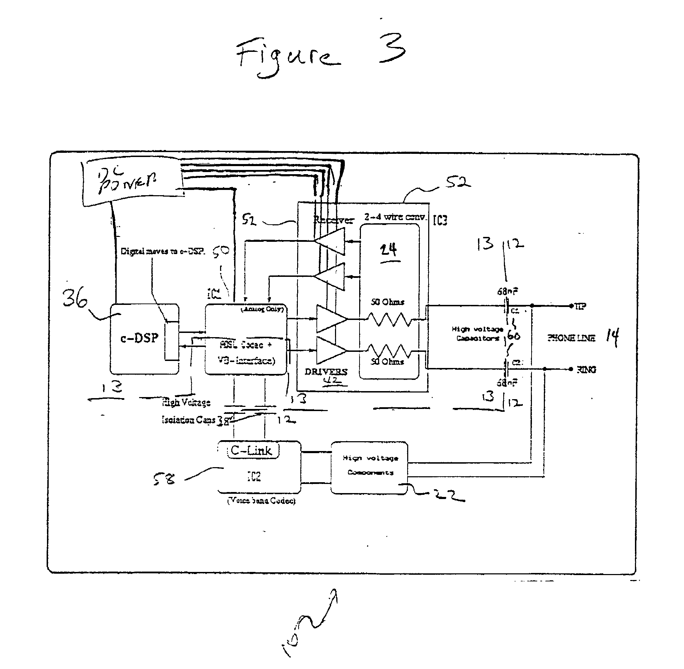

With reference to Figure 3, another example of an embodiment of the invention is shown. The broadband data portion 13 of the modem 10 contains a digital codec and VB interface chip 50. A front end portion 52 of the circuit is coupled to the phone line 14 with high voltage capacitors 60, preferably about 68 nF. Isolation of the broadband data path 13 is achieved by the use of the high voltage capacitors. Each block in the broadband data path 13 is directly supplied with DC power. No transformer is required for this embodiment of the invention. It is believed that low frequency attenuation may be encountered due to coupling capacitor. This may optionally be compensated for by adjusting the transmit spectrum accordingly. Longitudinal balance resulting from the mismatch of termination resistors and the coupling capacitors may be an issue in this configuration and this configuration may require very high precision termination resistors and coupling capacitor.

The voice band portion of the circuit 12 draws its power from the PSTN line 14, preferably using high voltage components 22, such as bipolar transistors and diodes to perform the necessary DAA functions as above. A VB codec 58 codes and decodes the VB communications. Capacitive coupling 38 isolates the VB portion 12 of the circuit 10, preferably using high voltage capacitors in the range of 100-300 pF. The VB data signals pass through the digital codec / interface chip 50 to the signal processing circuit 36. It will be understood by those skilled in the arts that the VB portion 12 of the circuit may be omitted, providing a broadband data modem.

## Claims

1. A broadband data modem system comprising:
an interface to a Public Switched Telephone Network (PSTN) link;
a codec coupled to said interface opposite said PSTN for transmitting and receiving protocol-specific broadband data signals over said link;
a power supply operably coupled to said codec wherein said power supply comprises a DC-to-DC converter;
a coupling mechanism operably connected to said codec and said power supply for isolating said codec from said PSTN link; and
a processor operably connected to said coupling mechanism for providing a data interface between said codec and user hardware.

2. A modem system comprising:
an interface to a Public Switched Telephone Network (PSTN) link;
a codec coupled to said interface opposite said PSTN for transmitting and receiving protocol-specific signals over said link;
wherein said codec further comprises a voice band data portion and a broadband data portion;
a power supply for providing power to said codec digital portion and said codec voice portion wherein said power supply comprises a DC-to-DC converter;
a coupling mechanism operably connected to said codec for isolating said broadband data portion and said voice band data from said PSTN link; and
a processor operably connected to said coupling mechanism for providing a data interface between said codec and user hardware.

3. The modem of claim 1 or 2 wherein said power supply comprises a chopper circuit.

4. The modem of claim 1 or 2 wherein said power supply comprises a switching transformer.

5. The modem of claim 1 or 2 wherein said power supply is configured supply a plurality of different voltages to said codec, and wherein said power supply further comprises secondary windings of said switching transformer operatively coupled with rectifier diodes and filter capacitors.

6. The modem of claim 6 wherein said coupling mechanism comprises a plurality of high-voltage capacitors.

7. The modem of claim 1 or 2 wherein said coupling mechanism comprises a plurality of high voltage capacitors with capacitance in the range of approximately 100 - 300 pF.

8. The modem of claim 1 or 2 wherein said voice band data codec portion draws power from the PSTN.

9. A data modem comprising:
a telephone line interface;
a broadband data channel coupled to said interface;
a front end portion;
a high-frequency transformer coupling said line interface and said front end portion for isolating said broadband data channel;
an independent power source operably coupled to said broadband data channel; and
a voice band channel capacitively coupled to said line interface.

10. A broadband data modem comprising:
a telephone line interface;
a broadband data channel coupled to said interface;
a front end portion;
capacitive coupling coupling said line interface and said front end portion for isolating said broadband data channel; and
a power source operatively coupled to said broadband data channel; and
a voice band channel capacitively coupled to said line interface.
